# EUROPEAN PATENT APPLICATION

(11) **EP 4 711 657 A1**
(43) Date of publication of application: **18.03.2026**
(21) Application number: 25202480.7
(22) Date of filing: 16.09.2025
(51) Int. Cl.: F16L 11/22

(54) **COVER FOR A BUNDLE OF HOSES**

(30) Priority: 17.09.2024 NL 2038643
(71) Applicant: Eriks N.V., 3511 LK Utrecht (NL)
(72) Inventor: Bastin, Stef, 3511 LK Utrecht (NL); Van den Akker, Rene, 3511 LK Utrecht (NL)
(74) Representative: Brantsandpatents bv

(57) **Abstract**

The current invention relates to a cover 3 for encasing two or more hydraulic hoses that together form a bundle, the cover 3 comprising: one or more inner layers 4 comprising an open mesh or braid formed from a first plurality of polymeric strands, and one or more outer layers 5 comprising an open mesh or braid formed from a second plurality of polymeric strands, wherein the one or more outer layers 5 encase the one or more inner layers 4.

## Description

### FIELD OF THE INVENTION

The field of the invention relates to a cover for encasing a bundle of hoses and an assembly comprising a cover an multiple hoses in a bundled configuration.

### BACKGROUND

With the increase in power of windmills used in wind farms, larger diameter monopiles are required. These larger monopiles necessitate more power to drill or hammer them into the seabed, which in turn demands more hydraulic power to be transferred between the powerpack onboard the ship and the hammering devices craned on top of the monopile.

This requirement leads to the need for either more or larger hydraulic hoses. Currently, a multitude of hoses must be reeled in separately, creating several challenges onboard the ships placing the monopiles into the seabed. These challenges include time loss when a hose is not reeled in properly, unsafe situations, and damage to the hoses or other parts.

The existing solutions involve creating a hose bundle where the cover is made with yarn that requires an additional coating, resulting in a less efficient production process, a bundle with high friction parameters in the field, and a negative environmental and health impact.

The present invention aims to resolve at least some of the problems and disadvantages mentioned above.

### SUMMARY OF THE INVENTION

The present invention and embodiments thereof serve to provide a solution to one or more of above-mentioned disadvantages. The present invention relates to a cover for encasing two or more hydraulic hoses that together form a bundle according to claim 1. Specifically, the cover comprises one or more inner layers and one or more outer layers, both formed from a plurality of polymeric strands in an open mesh or braided configuration.

In a second aspect, the present invention relates to a hydraulic assembly according to claim 9. More particular, the hydraulic assembly as described herein includes a bundle of hoses encased by a cover and is designed to transfer hydraulic power efficiently.

The present invention also relates to a method for encasing hydraulic hoses with a cover and a use of the cover for encasing hydraulic hoses according to claim 11 and 20, respectively. Further, the invention relates to a use of the hydraulic assembly for transferring hydraulic power, preferably in wind parks, according to claim 21.

The cover and hydraulic assembly provide a robust and efficient solution for the deployment of large-diameter monopiles in offshore wind farms. The key advantages of the invention include its good abrasion resistance, low friction, pretensioned assembly to withstand axial and radial loading, improved handling, and an environmentally friendly production process due to the pre-coated yarns.

Furthermore, the cover does not require an additional coating after braiding, making the production process more efficient and environmentally friendly.

The hydraulic assembly is designed to address the challenges associated with handling and deploying large diameter hydraulic hoses in offshore wind farm applications. This hydraulic assembly is particularly beneficial in scenarios where monopiles with larger diameters are used, necessitating higher hydraulic power for drilling or hammering into the seabed. The hydraulic assembly comprises a multilayer construction that provides increased durability and extends the life of the hydraulic assembly in challenging sea conditions. This hydraulic assembly is designed to facilitate the transfer of hydraulic power from the powerpack onboard a ship to the hammering devices mounted on top of the monopiles. By consolidating multiple hydraulic hoses into a cover, the hydraulic assembly simplifies handling and reduces the time and effort required for deployment and retrieval.

### DETAILED DESCRIPTION OF THE INVENTION

The present invention concerns a cover for hydraulic hoses.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The term "cover" as used herein is synonym to "sleeve" or "sheath" and refers to a (protective) close-fitting covering designed to encase and secure two or more hoses arranged in a bundle, providing structural integrity and/or protection from external elements.

The term "hydraulic hose" as used herein refers to a flexible tube that is used to convey hydraulic fluid under pressure, typically as part of a hydraulic system for transferring power.

The term "bundle" as used herein refers to an arrangement of two or more hydraulic hoses grouped together to form a single unit.

The term "polymeric strand" as used herein refers to an individual fiber or yarn made from a polymer material, used herein to create a mesh or braid for forming layers within the cover.

The term "hydraulic assembly" as used herein refers to a system comprising a bundle of hydraulic hoses encased by a cover, designed to transfer hydraulic power.

The term "polymeric coating" as used herein refers to a (protective) layer applied to a surface, chosen from materials such as polyurethane, silicone, acrylic, latex, polyethylene, polyvinylchloride (PVC), and fluoropolymer.

The term "pre-coated" refers in the present invention to polymeric strands that have been coated with a polymeric coating prior to the braiding process. This coating can be chosen from materials such as polyurethane, silicone, acrylic, latex, polyethylene, polyvinylchloride (PVC), and fluoropolymer, with a preference for PVC coating.

The term "central hose" as used herein refers to a hydraulic hose positioned at the center of a bundle, around which two or more peripheral hoses are twisted.

The term "peripheral hose" as used herein refers to a hydraulic hose located around the central hose in a bundle, contributing to the overall structure and distribution of the hydraulic assembly.

The term "twist length" as used herein refers to the distance measured along the central axis of the central hose in a bundle during a full 360-degree rotation of a peripheral hose.

The term "strand tension" as used herein refers to the force applied to individual yarn strands during the braiding process, measured in kilograms per yarn (kg/yarn), preferably measured according to ISO 10122:2014.

The term "strand angle" as used herein refers to the angular orientation of the yarn strands relative to a reference axis during the braiding process, measured in degrees (°), preferably measured according to ISO 10122:2014.

The term "braiding velocity" as used herein refers to the speed at which the yarn strands are braided, measured in millimeters per second (mm/s).

The term "minimum breaking load (MBL)" as used herein refers to the lowest force or load at which the tension-relief wires will break or fail, measured in kilograms (kg).

When used in the context of "one or more outer layers encase the inner layer(s)", the term "encase" includes layers directly or indirectly encasing the inner layer(s).

For example, a second outer layer encasing a first outer layer is also considered an outer layer encasing the inner layer(s).

In a first aspect, the invention provides a cover for encasing two or more hoses that together form a bundle. Preferably, the cover is for encasing two or more hydraulic hoses that together form a bundle.

The cover comprises one or more inner layers, preferably one or two inner layers, and one or more outer layers. All layers comprise preferably an open mesh or braid formed from a plurality of polymeric strands. It is to be understood that "inner layers" refers to one or more layers closest to the bundle of hoses, on the inside of the cover, made out of the same material and "outer layers" refers to one or more layers encasing the one or more inner layers. For example, in a scenario wherein the cover comprises two outer layers and one inner layer, the inner layer is encased by a first outer layer, and the first outer layer is encased by a second outer layer forming two outer layers. In a scenario wherein the cover comprises two inner layers and two outer layers, a first inner layer is encased by a second inner layer, the second inner layer is encased by a first outer layer, and the first outer layer is encased by a second outer layer forming two outer layers.

It is to be understood that "the first inner layer" refers to the layer closest to the bundle of hoses, regardless if a second inner layer is present or not.

In an embodiment, the cover comprises between 1 and 10 outer layers, preferably between 1 and 5 outer layers, and most preferably between 1 and 3 outer layers. In one embodiment, the cover comprises one outer layer. In another embodiment, the cover comprises two outer layers. In yet another embodiment, the cover comprises three outer layers.

The plurality of polymeric strands can be chosen from: nylon yarn, polyester yarn, polypropylene yarn, acrylic yarn, polyethylene yarn, aramid yarn and elastane yarn. Preferably, the one or more inner layers and the one or more outer layers comprise an open mesh or braid formed from a plurality of polymeric strands, wherein the type of polymeric strands differs between the inner layers and the outer layers.

In an embodiment, the cover comprises one inner layer. In another embodiment, the cover comprises two inner layers.

In an embodiment, the one or more inner layer comprise an open mesh or braid formed from a first plurality of polymeric strands, and the one or more outer layers comprise an open mesh or braid formed from a second plurality of polymeric strands. In a preferred embodiment, the first plurality of polymeric strands, and the second plurality of polymeric strands are made from a different type of polymeric yarn.

In a preferred embodiment, the cover comprises:
a. one or more inner layers, preferably one or two inner layers, comprising an open mesh or braid formed from a first plurality of polymeric strands, and
b. one or more outer layers comprising an open mesh or braid formed from a second plurality of polymeric strands, wherein the one or more outer layers encase the one or more inner layers.

The cover is designed to address the challenges associated with the deployment of large-diameter monopiles in offshore wind farms. The cover facilitates easier handling and reducing operational inefficiencies. This configuration is particularly advantageous in applications where high hydraulic power transmission is required, such as in the installation of monopiles for wind turbines.

The cover offers several unique features that distinguish it from existing solutions. Firstly, the braided cover provides excellent abrasion resistance and low friction. The braided cover is pre-tensioned, allowing it to withstand external loads in both axial and radial directions. This pre-tensioned packaging ensures that the hoses within the hydraulic assembly remain securely in place, even under significant mechanical stress.

In another or further preferred embodiment, the cover comprises:
a. one or more inner layers, preferably one or two inner layers, comprising an open mesh or braid formed from a first plurality of polymeric strands, and
b. an outer layer comprising an open mesh or braid formed from a second plurality of polymeric strands, wherein the outer layer encases the one or more inner layers.

In another or further preferred embodiment, the cover comprises:
a. one or more inner layers, preferably one or two inner layers, comprising an open mesh or braid formed from a first plurality of polymeric strands, and
b. two or more outer layers comprising an open mesh or braid formed from a second plurality of polymeric strands, wherein the two or more outer layers encase the one or more inner layers.

In another or further preferred embodiment, the cover comprises:
a. one inner layer comprising an open mesh or braid formed from a first plurality of polymeric strands, and
b. one or more outer layers comprising an open mesh or braid formed from a second plurality of polymeric strands, wherein the two or more outer layers encase the inner layer.

In an embodiment, the first plurality of polymeric strands and second plurality of polymeric strands are independently chosen from: nylon yarn, polyester yarn, polypropylene yarn, acrylic yarn, polyethylene yarn, aramid yarn and elastane yarn.

In an embodiment, the first plurality of polymeric strands is chosen from: polyester yarn, polypropylene yarn, and acrylic yarn, preferably polyester yarn. Polyester yarn is preferred for its durability and ability to maintain the twist configuration of the hoses.

In an embodiment, the second plurality of polymeric strands is chosen from: nylon yarn, polyethylene yarn, and aramid yarn, preferably nylon yarn. In case the cover comprises more than one outer layer, the outer layers can be made from the same or from a different type of polymeric yarn. In a preferred embodiment, the outer layers are made from the same type of polymeric yarn.

It has been found that the implementation of multiple outer layers improves the wear resistance of the cover, resulting in an increased performance in even harsher environmental conditions.

The polymeric strands are selected to provide a balance between mechanical strength and ease of manufacturing, ensuring that the cover can withstand significant axial and radial loads without compromising its structural integrity.

In a preferred embodiment, the cover comprises:
a. one or more inner layers, preferably one or two inner layers, comprising an open mesh or braid formed from a first plurality of polymeric strands, wherein the first plurality of polymeric strands are polyester yarn, and
b. one or more outer layers comprising an open mesh or braid formed from a second plurality of polymeric strands, wherein the second plurality of polymeric strands are nylon yarn, and wherein the one or more outer layers encase the one or more inner layers.

This is particularly advantageous in applications where the bundle is exposed to harsh environmental conditions, as the inherent properties of the polymeric strands provide sufficient protection without the need for additional chemical treatments of the cover.

In an embodiment, the second plurality of polymeric strands, preferably nylon yarn, are pre-coated with a polymeric coating.

The polymeric coating can be chosen from: polyurethane coating, silicone coating, acrylic coating, latex coating, polyethylene coating, polyvinylchloride (PVC) coating and fluoropolymer coating, preferably the polymeric coating is a PVC coating. The PVC coating is preferred for its flame-resistant properties and thermal stability, which may range between -54 and +138°C. This wide operational temperature range ensures that the cover can perform optimally in diverse environmental conditions, from extremely cold to very hot climates.

If the yarns used in the construction of the cover or hydraulic assembly are pre-coated, the need for an additional coating process after braiding is eliminated. This not only makes the production process more efficient but also reduces the environmental impact, as the pre-coated yarns are more environmentally friendly.

The pre-coating is thus applied to the strands prior to the braiding, ensuring that the strands are uniformly coated and that the coating is securely bonded to the fibers. This pre-coating not only improves the abrasion resistance and low friction properties of the cover but also simplifies the manufacturing process by eliminating the need for post-braiding treatments.

This pre-coating is different from a coating applied to the cover as a whole, because the pre-coating involves applying a coating layer, preferably a polymeric layer, to the strands before they are braided into the cover configuration. The strands are thus pre-coated on a strand-level rather than coated on cover-level.

A pre-coating of polymeric strands increases the overall durability and lifespan of the hose configuration. This pre-coating is optionally performed using a variety of polymeric materials, which may include, but are not limited to, PVC or polyurethane.

The pre-coating enhances the abrasion resistance of the strands, making the cover more robust against wear and tear during use. This is particularly advantageous in marine environments where the hoses are exposed to harsh conditions, such as saltwater, UV radiation, and physical abrasion from contact with other equipment. The pre-coating may also provide a smoother surface, which can reduce friction when the hoses are being handled, reeled, or deployed, thereby minimizing the risk of damage.

Preferably, the pre-coating is an environmentally friendly pre-coating. The materials used for the pre-coating are preferably selected to minimize environmental impact, and the application process is optimized to reduce waste and emissions. This approach not only improves the sustainability of the cover and hydraulic assembly but also makes the production process more efficient and cost-effective.

The pre-coating provides a uniform layer of protection around each strand, ensuring consistent performance across the entire length of the cover. This uniformity is advantageous for maintaining the structural integrity of the cover and the hydraulic assembly under various loading conditions, including axial and radial loads. The pre-coating also helps to maintain the flexibility of the cover, allowing it to be easily handled and manipulated without compromising their durability.

Overall, the pre-coated polymeric strands provide multiple benefits, including increased durability, enhanced abrasion resistance, reduced friction, improved environmental sustainability, and greater structural integrity. These advantages make the cover and the hydraulic assembly particularly suitable for demanding applications, such as those encountered in offshore wind farms and other marine environments.

In a preferred embodiment, the second plurality of polymeric strands include a PVC coating. The PVC coating minimizes the weight of the cover, thereby facilitating easier handling and deployment. The PVC coating preferably has a thickness ranging from 0.1 mm to 2 mm, more preferably from 0.2 mm to 1.5 mm, more preferably from 0.3 mm to 1 mm, more preferably from 0.4 mm to 0.8 mm, and most preferably from 0.5 mm to 0.7 mm.

The use of PVC coating is preferred due to its advantageous properties. The coating provides a smooth surface that reduces friction during the handling and deployment of the hose bundle. This low-friction characteristic is particularly beneficial when the hoses are being reeled in or out, as it minimizes the resistance encountered, thereby reducing the effort required by the operators.

Additionally, the PVC-coated, especially when applied to nylon yarn, offers good abrasion resistance, which is a significant advantage in harsh marine environments where the hoses are subject to constant wear and tear. The abrasion-resistant property ensures a longer lifespan for the hose bundle, reducing the need for frequent replacements and thereby lowering maintenance costs.

The PVC coating also enhances the environmental friendliness of the hose configuration. Unlike other coatings that may require additional chemical treatments, the PVC coating can be applied directly to the polymeric strands, simplifying the production process and reducing the environmental impact. This makes the cover more sustainable and easier to produce.

In further embodiments, the PVC coating may include additives to improve its flame resistance, providing an additional safety feature. The flame-resistant property is particularly advantageous in applications where the cover may be exposed to high temperatures or open flames.

Moreover, the PVC coating may be applied in various colors to facilitate easy identification and organization of the hoses. This color-coding system can be particularly useful in complex installations where multiple hose bundles are used, allowing operators to quickly and easily identify the correct hoses for specific tasks.

In an embodiment, the cover has a tensile strength of between 1 and 50 kg/yarn, preferably between 1 and 25 kg/yarn, more preferably between 1 and 20 kg/yarn, more preferably between 5 and 15 kg/yarn, and most preferably between 8 and 12 kg/yarn, such as approximately 10 kg/yarn.

In an embodiment, the cover comprises one or more tension-relief wires included between a first inner layer and a second inner layer or between the one or more inner layers and the one or more outer layers. In a preferred embodiment, the cover comprises two or more tension-relief wires between a first inner layer and a second inner layer or between the one or more inner layers and the one or more outer layers. In another or further preferred embodiment, the cover comprises two tension-relief wires between a first inner layer and a second inner layer or between the one or more inner layers and the one or more outer layers. In another embodiment the cover comprises three, four or five tension-relief wires between a first inner layer and a second inner layer or between the one or more inner layers and the one or more outer layers.

In a preferred embodiment, the tension-relief wires are is included between the first layer in the cover and the next layer, regardless of how many inner and outer layers are present in the cover. "The first layer" refers to the layer closest to the bundle of hoses and is thus synonym to "first inner layer" because the first layer is an inner layer.

Thus, preferably, in case the cover comprises more than one inner layer, the cover comprises one or more tension-relief wires included between a first inner layer and a second inner layer.

Thus, preferably, in case the cover comprises one inner layer, the cover comprises one or more tension-relief wires included between said inner layer and the one or more outer layers.

The tension-relief wires are preferably integrated into the structure to assist in the hoisting and movement of the bundle. The inclusion of tension-relief wires is particularly advantageous in scenarios where the hydraulic assembly needs to be frequently lifted or moved. This feature reduces the strain on the hydraulic hoses themselves, thereby extending their operational lifespan. More preferably, the tension-relief wires are configured to distribute the load evenly across the bundle, minimizing the risk of damage to individual hoses.

The tension-relief wires can withstand axial loads, ensuring that the hydraulic assembly can maintain its structural integrity under various operational conditions. The wires may optionally be coated with a protective layer to prevent corrosion and wear, further enhancing their durability. The protective coating may be made from materials such as PVC, polyurethane, or other suitable polymers.

The tension-relief wires are preferably arranged in a manner that allows for easy integration into the existing braiding process used to create the inner and one or more outer layers of the hose bundle. This integration ensures that the production process remains efficient and cost-effective. In one embodiment, the wires are spaced at regular intervals and run along the length of the hose bundle, providing consistent support throughout.

In another preferred embodiment, the tension-relief wires are designed to be flexible enough to allow for the necessary twisting of the hose bundle without compromising their structural support. This flexibility is particularly beneficial when the hose bundle is spooled onto a reel, as it ensures that the hoses remain properly aligned and connected.

Overall, the inclusion of tension-relief wires in the cover offers a robust solution for managing the mechanical stresses associated with hoisting and moving the hose bundle. This feature preferably enhances the overall reliability and safety of the system, making it well-suited for demanding applications such as those encountered in wind farm installations.

The tension-relief wires may be made from various materials. More preferably, the wires are constructed from nylon, aramid, or a similar material that offers a balance of strength, flexibility, and resistance to environmental factors such as saltwater and temperature variations. Steel or stainless steel is less preferred due to the weight and it can damage the surrounding polymer materials.

In a preferred embodiment, the one or more of tension-relief wires are constructed from nylon or aramid fibers.

In a further embodiment, the minimum Breaking load (MBL) of the tension-relief wires is between 2.500 and 50.000 kg, preferably between 10.000 and 40.000 kg, more preferably between 15.000 and 30.000 kg, and even more preferably between 20.000 and 25.000 kg.

In a specific embodiment, the cover comprises:
a. one or more inner layers, preferably one or two inner layers, comprising an open mesh or braid formed from a first plurality of polymeric strands, wherein the first plurality of polymeric strands are polyester yarn, and
b. one or more outer layers comprising an open mesh or braid formed from a second plurality of polymeric strands, wherein the second plurality of polymeric strands are nylon yarn, and wherein the one or more outer layers encase the one or more inner layers,
wherein the cover comprises one or more tension-relief wires included between a first inner layer and a second inner layer or between the one or more inner layers and the one or more outer layers, and wherein the nylon yarn is pre-coated with a PVC coating.

In another or further specific embodiment, the cover comprises:
a. one inner layer comprising an open mesh or braid formed from a first plurality of polymeric strands, wherein the first plurality of polymeric strands are polyester yarn, and
b. one or more outer layers comprising an open mesh or braid formed from a second plurality of polymeric strands, wherein the second plurality of polymeric strands are nylon yarn, and wherein the one or more outer layers encase the one or more inner layers,
wherein the cover comprises one or more tension-relief wires included between the inner layer and the one or more outer layers, and wherein the nylon yarn is pre-coated with a PVC coating.

In another or further specific embodiment, the cover comprises:
a. two inner layers, comprising a first and a second inner layer, comprising an open mesh or braid formed from a first plurality of polymeric strands, wherein the first plurality of polymeric strands are polyester yarn, and
b. one or more outer layers comprising an open mesh or braid formed from a second plurality of polymeric strands, wherein the second plurality of polymeric strands are nylon yarn, and wherein the one or more outer layers encase the one or more inner layers,
wherein the cover comprises one or more tension-relief wires included between the first inner layer and the second inner layer, and wherein the nylon yarn is pre-coated with a PVC coating.

The cover and resulting hydraulic assembly offers a robust and efficient solution for handling large diameter hydraulic hoses in offshore wind farm applications. Its multilayer construction, combined with the integrated tension-relief wires, provides enhanced durability, reduced friction, and improved handling. These features make the cover and hydraulic assembly an ideal choice for challenging sea conditions, ensuring reliable performance and extended lifespan of the hydraulic assembly.

In a second aspect, the invention relates to an assembly, preferably a hydraulic assembly. The hydraulic assembly is preferably suitable for transferring hydraulic power.

In an embodiment, the assembly comprises a bundle of two or more hoses encased by a cover as described above, preferably the assembly comprises a bundle of two or more hydraulic hoses encased by a cover as described above.

In an embodiment, the bundle comprises between 2 and 20 hoses, preferably between 5 and 10 hoses, more preferably between 6 and 8 hoses and with the most preference 7 hoses.

In an embodiment, the bundle includes a central hose wherein two or more peripheral hoses are twisted around the central hose. In a preferred embodiment, the bundle includes a central hose wherein four or more peripheral hoses are twisted around the central hose, preferably six peripheral hoses are twisted around the central hose.

In an embodiment, the hoses are arranged in the bundle such that one central hose is surrounded by two or more, preferably six, hoses of identical diameter and specification. Th twisted arrangement ensures minimal length deviation between the end-couplings. This feature is particularly advantageous when the bundle is spooled onto a hose-reel, as it maintains uniform hose lengths, facilitating seamless connections to other bundles, hydraulic tools, and hydraulic power units.

The bundle preferably has a twist length of between 1 and 10 m, preferably between 2 and 7 m, more preferably between 3 and 6 m, most preferably between 3 and 5 m. This means the hoses are arranged in a twisted configuration, where approximately twist length, the peripheral hoses spiral (360°) around the central hose. This twisting configuration has proven minimal length deviation between the end-couplings, thereby facilitating seamless connectivity to other bundles, hydraulic tools, and hydraulic power units.

The hydraulic assembly's enhanced structural strength and durability result in significant operational benefits. By reducing the likelihood of damage, the assembly ensures uninterrupted operation, minimizes maintenance requirements, and extends the overall lifespan of the hydraulic system. These advantages translate to increased efficiency, safety, and cost-effectiveness in various applications, making the hydraulic assembly a valuable innovation in the field. The high abrasion resistance and low friction characteristics of the hydraulic assembly are particularly advantageous as they result in less wear and tear on the hoses. This, in turn, leads to reduced maintenance requirements, which is highly beneficial in the context of wind farms where maintenance can be both time-consuming and costly.

In an embodiment, the diameter of the hoses is at least 3.5 cm, preferably at least 4 cm, more preferably at least 4.5 cm, even more preferably at least 5 cm. In some preferred embodiments the diameter of the hoses is at least 5.5 cm or at least 6 cm.

In another or further embodiment, the diameter of the hoses is between 3.5 and 20 cm, preferably between 4 and 15 cm, more preferably between 4.5 and 15 cm, even more preferably between 5 and 15 cm. The hydraulic hoses within the bundle are designed to handle large diameters, preferably greater than 2 inches or 5.08 cm. This allows the hydraulic assembly to accommodate the high power requirements of modern windmills, ensuring reliable fluid transfer over extended distances.

Since the cover is for encasing two or more hydraulic hoses, in an embodiment, the inner diameter of the cover is large enough to cover two hoses, for example of at least 2 inches, as such the inner diameter of the cover is preferably at least 4 inches, or 10.16 cm, preferably at least 11 cm, more preferably at least 15 cm, even more preferably at least 18 cm, even more preferably at least 20 cm. This inner diameter makes the cover designed to address the challenges associated with handling and deploying large diameter hydraulic hoses in offshore wind farm applications.

In another or further embodiment, the inner diameter of the cover is between 10.16 and 50 cm, preferably between 11 and 60 cm, more preferably between 15 and 50 cm, even more preferably between 15 and 40 cm. The hydraulic hoses within the bundle are designed to handle large diameters, preferably greater than 2 inches or 5.08 cm. This allows the hydraulic assembly to accommodate the high power requirements of modern windmills, ensuring reliable fluid transfer over extended distances.

In an embodiment, the length of the hoses is at least 10 m, preferably at least 20 m, more preferably at least 30 m, even more preferably at least 40 m.

In another or further embodiment, the length of the hoses is at most 70 m, preferably at most 60 m, more preferably at most 50 m, even more preferably at most 40 m.

In another or further embodiment, the length of the hoses is between 10 and 60 m, preferably between 20 and 60 m, more preferably between 30 and 60 m, even more preferably between 40 and 60 m. The hydraulic hoses within the bundle are preferably of a maximum length of 60 meters. This allows the hydraulic assembly to accommodate the high power requirements of modern windmills, ensuring reliable fluid transfer over extended distances.

Comparably, in an embodiment, the length of the cover is at least 10 m, preferably at least 15 m, and more preferably at least 20 m. In another or further embodiment, the length of the cover is at most 100 m, preferably at most 70 m, more preferably at most 60 m.

In another or further embodiment, the length of the cover is between 10 and 100 m, preferably between 10 and 80 m, preferably between 10 and 70 m, preferably between 10 and 60 m, preferably between 20 and 60 m. The hydraulic hoses within the bundle, and as such also the cover, are preferably of a maximum length of 60 meters, although larger lengths are also possible. This allows the hydraulic assembly to accommodate the high power requirements of modern windmills, ensuring reliable fluid transfer over extended distances.

The hydraulic assembly is designed to address the challenges associated with handling and deploying large diameter hydraulic hoses in offshore wind farm applications. This hydraulic assembly is particularly beneficial in scenarios where monopiles with larger diameters are used, necessitating higher hydraulic power for drilling or hammering into the seabed. The hydraulic assembly comprises a dual-braided construction that provides increased durability and extends the life of the hydraulic assembly in challenging sea conditions. This hydraulic assembly is designed to facilitate the transfer of hydraulic power from the powerpack onboard a ship to the hammering devices mounted on top of the monopiles. By consolidating multiple hydraulic hoses into a cover, the hydraulic assembly simplifies handling and reduces the time and effort required for deployment and retrieval.

In a specific embodiment, the assembly comprises a bundle of two or more, preferably seven, hoses encased by a cover, wherein the bundle includes a central hose wherein two or more, preferably six, peripheral hoses are twisted around the central hose, wherein the cover comprises:
a. one or more inner layers, preferably one or two inner layers, comprising an open mesh or braid formed from a first plurality of polymeric strands, wherein the first plurality of polymeric strands are polyester yarn, and
b. one or more outer layers comprising an open mesh or braid formed from a second plurality of polymeric strands, wherein the second plurality of polymeric strands are nylon yarn, and wherein the one or more outer layers encase the one or more inner layers,
wherein the cover comprises one or more tension-relief wires included between a first inner layer and a second inner layer or between the one or more inner layers and the one or more outer layers, and wherein the nylon yarn is pre-coated with a PVC coating.

The resulting hydraulic assembly offers a robust and efficient solution for handling large diameter hydraulic hoses in offshore wind farm applications. Its dual-braided construction, combined with the unique twist configuration and integrated tension-relief wires, provides enhanced durability, reduced friction, and improved handling. These features make the hydraulic assembly an ideal choice for challenging sea conditions, ensuring reliable performance and extended lifespan of the hydraulic assembly.

In a third aspect, the invention relates to a method for manufacturing an assembly, preferably a hydraulic assembly. The hydraulic assembly is preferably suitable for transferring hydraulic power. In one embodiment, the method is a method for manufacturing an assembly as described herein.

In an embodiment, the method comprises the steps of:
a. twisting two or more of hydraulic hoses to form a bundle;
b. braiding a first plurality of polymeric strands around the bundle of hydraulic hoses to form one or more inner layers, preferably one or two inner layers, comprising an open mesh or braid; and
c. braiding a second plurality of polymeric strands around said one or more inner layers to form one or more outer layers comprising an open mesh or braid.

The bundle is preferably twisted as described above.

In an embodiment, the method comprises the step of incorporating a pair of tension-relief wires between a first inner layer and a second inner layer or between the one or more inner layers and the one or more outer layers. This step would be carried out in between steps (b) and (c).

In an embodiment, the second plurality of polymeric strands are coated with a polymeric coating prior to braiding. This results in a plurality of pre-coated polymeric strands

In an embodiment, the polymeric coating is chosen from: polyurethane coating, silicone coating, acrylic coating, latex coating, polyethylene coating, polyvinylchloride (PVC) coating and fluoropolymer coating, preferably the polymeric coating is a PVC coating.

In an embodiment, the strand tension during braiding is between 0.1 and 10 kg/yarn, preferably between 0.5 and 10 kg/yarn, more preferably between 0.5 and 5 kg/yarn.

In an embodiment, the strand angle during braiding is between 40° and 90°, preferably between 45° and 85°, more preferably between 45° and 80°, even more preferably between 45° and 75°.

In an embodiment, the braiding velocity is between 1 and 1000 mm/s, preferably between 5 and 750 mm/s, more preferably between 10 and 500 mm/s.

The above configuration allows for axial and radial loading without compromising the integrity of the hydraulic hoses. This is achieved through the precise application of tension during the braiding process, which ensures that the yarns are tightly wound and capable of distributing loads evenly. This configuration is particularly beneficial for applications where the hose bundle is subject to frequent movement or heavy usage, as it minimizes the risk of damage to the hoses and extends the overall lifespan of the hydraulic assembly.

In a fourth aspect, the invention relates to a use of a cover as described herein for encasing two or more hydraulic hoses that together form a bundle. In a fifth aspect, the invention relates to a use of a hydraulic assembly as described herein for transferring hydraulic power, preferably the transfer of hydraulic power in wind farms.

In an embodiment, the hydraulic assembly is used at an operating temperature of between -50 and 150°C, more preferably between -40 and 140°C, more preferably between -30 and 130°C, more preferably between -20 and 120°C, and most preferably between -10 and 110°C. The cover exhibits enhanced thermal stability, allowing it to perform reliably in a wide range of temperatures.

The present invention will be now described in more details, referring to examples that are not limitative.

### DESCRIPTION OF FIGURES

The following numbering refers to: (1) hydraulic assembly; (2) hydraulic hose; (3) cover; (4) inner layer; (5) outer layer; (6) tension-relief wire; (7) central hydraulic hose; (8) peripheral hydraulic hose; (9) twist length; (10) bundle of hoses; (11) polymeric strand; (12) hydraulic powerpack; (13) hose reel; (14) hydraulic tool; (15) second inner layer; (16) first outer layer; (17) second outer layer; (18) first inner layer.

With as a goal illustrating better the properties of the invention the following presents, as an example and limiting in no way other potential applications, a description of a number of preferred applications of the method for examining the state of the grout used in a mechanical connection based on the invention, wherein:

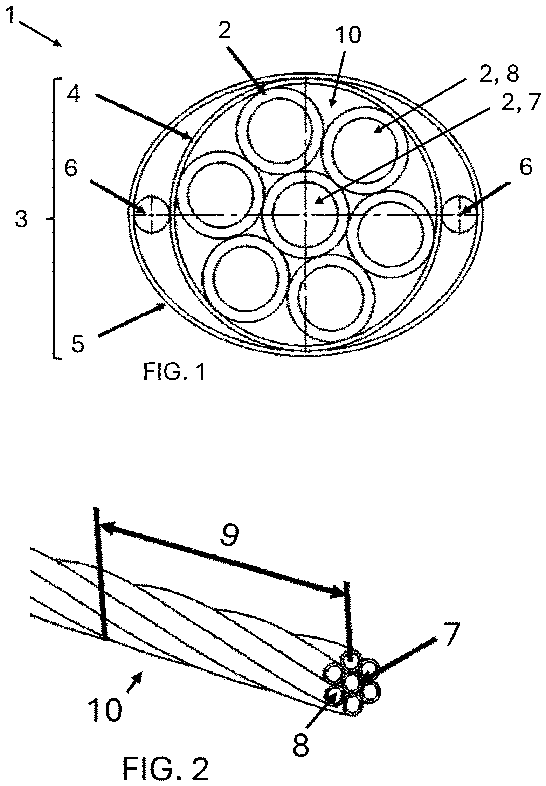

**Figure 1** shows a cross-sectional view of a hydraulic assembly according to an embodiment of the present invention.
   The hydraulic assembly (1) comprises a bundle (10) of hoses (2) comprising a central hose (7) and six peripheral hoses (8) encased by a cover (3). The cover (3) comprises one inner braided layer (4) and one outer braided layer (5). The current embodiment also comprises two tension-relief wires (6) for hoisting and moving the hydraulic assembly (1) between the inner layer (4) and outer layer (5). In other embodiments, three or more, such as three, four or five, tension-relief wires can be used.
   The most preferred form of the embodiment comprises a polyester inner layer and a nylon outer layer made of pre-coated nylon strands. The nylon strands are pre-coated with a PVC coating.
**Figure 2** shows a sketch of a twisted bundle of hoses according to an embodiment of the present invention.
   The twist length (9) in the bundle (10) is variable depending on the hose size and hose reel diameter. In a preferred embodiment, the twist length (9) is between 3 to 5 m. The twist length (9) refers to the distance measured along the central axis of the central hose (7) in a bundle during a full 360-degree rotation of a peripheral hose (8).

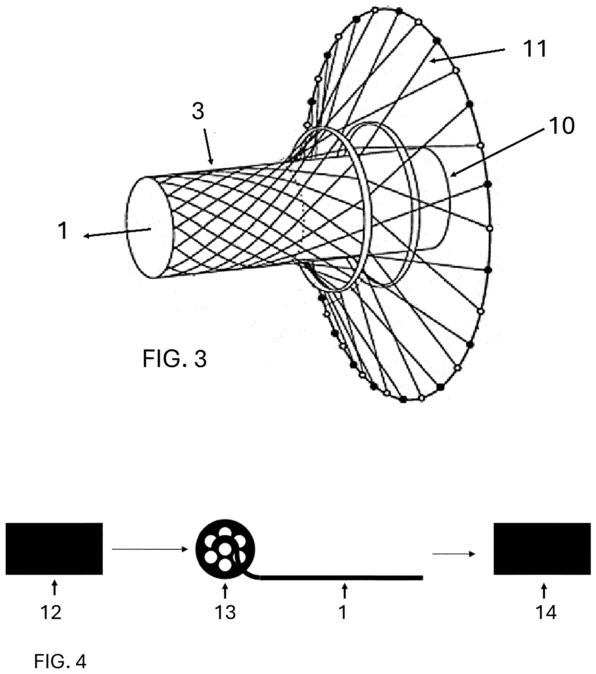

**Figure 3** shows a schematic representation of a method for a braiding step according to an embodiment of the present invention.
   The polymeric strands (11) of the inner or outer layer of the cover (3) are braided on the bundle (10) to obtain the hydraulic assembly (1)
**Figure 4** shows a schematic representation of the use of a hydraulic assembly according to an embodiment of the present invention.
   The hydraulic powerpack (12) generates and supplies pressurized hydraulic fluid, which is conveyed through the bundle of hoses in the hydraulic assembly (1) to a hydraulic tool (14). Managed by a hose reel (13), these hoses are stored, deployed, and retracted efficiently, allowing for organized handling and optimal fluid transmission. This configuration ensures that the hydraulic tool (14) operates efficiently and effectively in environments requiring robust power delivery and operational adaptability.

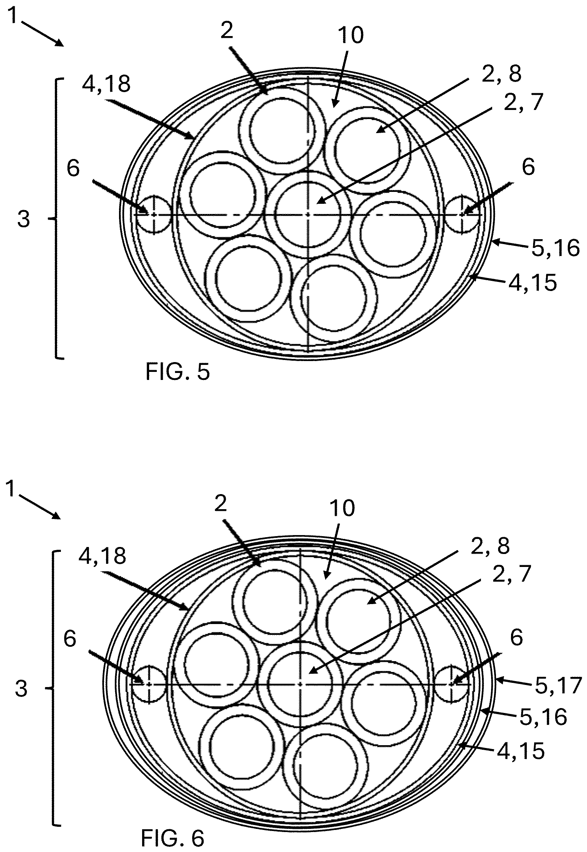

**Figures 5** and **6** also show a cross-sectional view of a hydraulic assembly according to embodiments of the present invention.

The hydraulic assemblies depicted in figures 5 and 6 are similar to the hydraulic assembly shown in figure 1 (reference numbers 1-8, 10), apart from the following differences:
Figure 5 shows a hydraulic assembly (1) comprising two inner layers (15, 18) and one outer layer (16). The hydraulic assembly (1) comprises a first inner layer (18) and a second inner layer (15) together forming the inner part of the cover (3). In this embodiment, the tension-relief wires are positioned between the first inner layer (18) and the second inner layer (15).

In this embodiment the inner layers are made from a polyester and the outer layer is made of pre-coated nylon strands. The nylon strands are pre-coated with a PVC coating.

Figure 6 shows a hydraulic assembly (1) comprising two inner layers (15, 18) and two outer layers (16, 17). The hydraulic assembly (1) comprises a first inner layer (18), a second inner layer (15) together forming the inner part of the cover (3), and a first outer layer (16), and a second outer layer together forming the outer part of the cover (3). In this embodiment, the tension-relief wires are positioned between the first inner layer (18) and the second inner layer (15).

In this embodiment the inner layers are made from a polyester and the outer layers are made of pre-coated nylon strands. The nylon strands are pre-coated with a PVC coating. In other embodiments, three or more, such as three, four or five, outer layers can be present.

It is supposed that the present invention is not restricted to any form of realization described previously and that some modifications can be added to the presented example of fabrication without reappraisal of the appended claims. For example, the present invention has been described referring to hydraulic hoses, but it is clear that the invention can be applied to other types of hoses.

The invention may thus be described according to the following embodiments:
1. A cover for encasing two or more hydraulic hoses that together form a bundle, the cover comprising:
   a. one or more inner layers comprising an open mesh or braid formed from a first plurality of polymeric strands, and
   b. one or more outer layers comprising an open mesh or braid formed from a second plurality of polymeric strands, wherein the one or more outer layers encase the one or more inner layers.
2. Cover according to embodiment 1, wherein the first plurality of polymeric strands and second plurality of polymeric strands are independently chosen from: nylon yarn, polyester yarn, polypropylene yarn, acrylic yarn, polyethylene yarn, aramid yarn and elastane yarn.
3. Cover according to any of the previous embodiments, wherein the first plurality of polymeric strands is chosen from: polyester yarn, polypropylene yarn, and acrylic yarn, preferably polyester yarn.
4. Cover according to any of the previous embodiments, wherein the second plurality of polymeric strands is chosen from: nylon yarn, polyethylene yarn, and aramid yarn, preferably nylon yarn.
5. Cover according to any of the previous embodiments, wherein the second plurality of polymeric strands are pre-coated with a polymeric coating.
6. Cover according to embodiment 5, wherein the polymeric coating is chosen from: polyurethane coating, silicone coating, acrylic coating, latex coating, polyethylene coating, polyvinylchloride (PVC) coating and fluoropolymer coating, preferably the polymeric coating is a PVC coating.
7. Cover according to any of the previous embodiments, wherein cover comprises one or more of tension-relief wires included between a first inner layer and a second inner layer or between the one or more inner layers and the one or more outer layers.
8. Cover according to embodiment 7, wherein the one or more of tension-relief wires are constructed from nylon or aramid fibers.
9. Cover according to embodiment 8, wherein the one or more of tension-relief wires have a minimum Breaking load (MBL) of the tension-relief wires between 20.000kg and 25.000kg.
10. A hydraulic assembly for transferring hydraulic power comprising a bundle of two or more hydraulic hoses encased by a cover according to any of embodiments 1-9.
11. Hydraulic assembly according to embodiment 10, wherein the bundle comprises between 5 and 10 hydraulic hoses.
12. Hydraulic assembly according to embodiment 11, wherein the bundle includes a central hose wherein two or more peripheral hoses are twisted around the central hose.
13. A method for manufacturing a hydraulic assembly for transferring hydraulic power, the method comprising:
   a. twisting two or more of hydraulic hoses to form a bundle;
   b. braiding a first plurality of polymeric strands around the bundle of hydraulic hoses to form one or more inner layers comprising an open mesh or braid; and
   c. braiding a second plurality of polymeric strands around said one or more inner layers to form one or more outer layers comprising an open mesh or braid.
14. Method according to embodiment 13, wherein the method comprises the step of incorporating a pair of tension-relief wires between a first inner layer and a second inner layer or between the one or more inner layers and the one or more outer layers.
15. Method according to any of embodiments 13 or 14, wherein the bundle comprises a central hose, wherein two or more peripheral hoses are twisted around the central hose.
16. Method according to embodiment 15, wherein a full 360° rotation of a peripheral hose has a twist length of between 3 and 5 m.
17. Method according to any of embodiments 13-16, wherein the second plurality of polymeric strands are coated with a polymeric coating prior to braiding.
18. Method according to any of embodiments 13-17, wherein the strand tension during braiding is between 0.5 and 5 kg/yarn
19. Method according to any of embodiments 13-18, wherein the strand angle during braiding is between 45° and 75°.
20. Method according to any of embodiments 13-19, wherein the braiding velocity is between 10 and 500mm/s.
21. Use of a cover according to any of embodiments 1-9 for encasing two or more hydraulic hoses that together form a bundle.
22. Use of a hydraulic assembly according to any of embodiments 10-12 for transferring hydraulic power in wind farms.

## Claims

1. A cover for encasing two or more hydraulic hoses that together form a bundle, the cover comprising:
a. one or more inner layers comprising an open mesh or braid formed from a first plurality of polymeric strands, and
b. one or more outer layers comprising an open mesh or braid formed from a second plurality of polymeric strands, wherein the one or more outer layers encase the one or more inner layers.

2. Cover according to claim 1, wherein the first plurality of polymeric strands is chosen from: polyester yarn, polypropylene yarn, and acrylic yarn, preferably polyester yarn and wherein the second plurality of polymeric strands is chosen from: nylon yarn, polyethylene yarn, and aramid yarn, preferably nylon yarn.

3. Cover according to any of the previous claims, wherein the second plurality of polymeric strands are pre-coated with a polymeric coating.

4. Cover according to claim 3, wherein the polymeric coating is chosen from: polyurethane coating, silicone coating, acrylic coating, latex coating, polyethylene coating, polyvinylchloride (PVC) coating and fluoropolymer coating, preferably the polymeric coating is a PVC coating.

5. Cover according to any of the previous claims, wherein cover comprises one or more of tension-relief wires included between a first inner layer and a second inner layer or between the one or more inner layers and the one or more outer layers, preferably wherein the one or more of tension-relief wires are constructed from nylon or aramid fibers.

6. Cover according to any of the previous claims, wherein the hoses have a diameter greater than 2 inches or 5.08 cm.

7. Cover according to any of the previous claims, wherein the cover has an inner diameter of at least 15 cm.

8. A hydraulic assembly for transferring hydraulic power comprising a bundle of two or more hydraulic hoses encased by a cover according to any of claims 1-7.

9. Hydraulic assembly according to claim 8, wherein the bundle comprises between 5 and 10 hydraulic hoses, wherein the hoses have a diameter greater than 2 inches or 5.08 cm, and wherein the bundle preferably includes a central hose wherein two or more peripheral hoses are twisted around the central hose.

10. A method for manufacturing a hydraulic assembly for transferring hydraulic power, the method comprising:
a. twisting two or more of hydraulic hoses to form a bundle;
b. braiding a first plurality of polymeric strands around the bundle of hydraulic hoses to form one or more inner layers comprising an open mesh or braid; and
c. braiding a second plurality of polymeric strands around said one or more inner layers to form one or more outer layers comprising an open mesh or braid.

11. Method according to claim 10, wherein the method comprises the step of incorporating a pair of tension-relief wires between a first inner layer and a second inner layer or between the one or more inner layers and the one or more outer layers.

12. Method according to any of claims 10-11, wherein the second plurality of polymeric strands are coated with a polymeric coating prior to braiding.

13. Method according to any of claims 10-12, wherein the hoses have a diameter greater than 2 inches or 5.08 cm.

14. Use of a cover according to any of claims 1-7 for encasing two or more hydraulic hoses that together form a bundle.

15. Use of a hydraulic assembly according to claim 8 or 9 for transferring hydraulic power in wind farms.
